# EUROPEAN PATENT APPLICATION

(11) **EP 4 782 227 A1**
(43) Date of publication of application: **29.07.2026**
(21) Application number: 25221717.9
(22) Date of filing: 09.12.2025
(51) Int. Cl.: B60D 1/02, B60D 1/145, B60D 1/48, B62B 5/00

(54) **SYSTEMS AND METHODS FOR COUPLING A PART-CONVEYING CART TO A POWERED VEHICLE**

(30) Priority: 28.01.2025 US 202519038865
(71) Applicant: The Boeing Company, Arlington, VA 22202 (US)
(72) Inventor: DesLauriers, Dustin Joseph, Arlington, VA, 22202 (US); McLean, Russell Owen, Arlington, VA, 22202 (US); O'Malley, Donovan Patrick, Arlington, VA, 22202 (US)
(74) Representative: Hoffmann Eitle

(57) **Abstract**

A coupling system (100) is configured to removably connect to a cart (102). The coupling system (100) includes a connecting arm (108), and an adapter (110) coupled to the connecting arm (108). The adapter (110) is configured to removably secure the connecting arm (108) to one or more stanchions (114) of the cart (102). One or more securing clamps (112) can be coupled to the connecting arm (108). The one or more securing clamps (112) are configured to removably secure the coupling system (100) in a stowed position to a beam of the cart (102).

## Description

### FIELD OF THE DISCLOSURE

Examples of the present disclosure generally relate to systems and methods for removably coupling a part-conveying cart to a powered vehicle, such as within a factory.

### BACKGROUND OF THE DISCLOSURE

Various systems, devices, structures, vehicles, and the like are manufactured within a factory. For example, a commercial aircraft includes numerous components that are assembled within a factory. The components includes parts that are assembled together, for example.

During manufacturing operations in a factory, parts often need to be moved from one location to another location on carts. The carts are typically manually moved by one or more individuals. For example, a known manual push-and-pull operation typically requires two people to work together to push and pull carts that are 30 feet long between different locations within a factory. Such operation can be performed numerous times per day. As can be appreciated, such a manual operation can lead to repetitive use injuries, and can also cause damage to the parts (such as if the cart tips over).

To reduce a likelihood of injuries, a known system includes a rubber bumper around a base of a cart. The rubber bumper reduces a likelihood of an individual injuring a shin or ankle when moving the cart. However, the rubber bumpers can wear over time, and may need to be replaced.

Additionally, to reduce a possibility of tipping, a known system includes larger wheels that roll easier over a floor. However, the larger wheels change the center of gravity of the cart, which can increase a tipping potential.

### SUMMARY OF THE DISCLOSURE

A need exists for an improved system and method for transporting parts within a factory. Further, a need exists for a system and a method which eliminate, minimize, or otherwise reduce a need for manual labor when transporting parts within a factory.

With those needs in mind, certain examples of the present disclosure provide a coupling system configured to removably connect to a cart. The coupling system includes a connecting arm, and an adapter coupled to the connecting arm. The adapter is configured to removably secure the connecting arm to one or more stanchions of the cart.

In at least one example, the connecting arm includes a leading end configured to removably connect to a hitch of a powered vehicle. The leading end is configured to pivotally connect to the hitch.

In at least one example, the one or more stanchions include a first stanchion connected to a second stanchion. A beam connects the first stanchion to the second stanchion. As a further example, the adapter is configured to removably connect to a column of the first stanchion below the beam.

In at least one example, the stanchions include a base, rollers downwardly extending from the base, a column upwardly extending from the base, and a support bar extending from a top end of the column.

The connecting arm is pivotally coupled to the adapter. In at least one example, the adapter includes an arm interface pivotally connected to a securing clamp by a hinge. The adapter is moveable between an open position and a closed position. The adapter in the closed position is configured to clamp to a portion of the one or more stanchions.

In at least one example, the adapter includes a first limiter pin and a second limiter pin. A range of pivotal motion of the connecting arm relative to the adapter is defined between the first limiter pin and the second limiter pin.

In at least one example, one or more securing clamps are coupled to the connecting arm. The one or more securing clamps are configured to removably secure the coupling system in a stowed position to a beam of the cart. The one more securing clamps can include a beam interface connected to an arm interface by a junction. The beam interface and the arm interface can include prongs defining an opening therebetween. One or more of the prongs can include engagement protuberances.

In at least one example, the adapter and the one or more securing clamps are formed via three-dimensional (3D) printing.

Certain examples of the present disclosure provide a system including a powered vehicle. A cart configured to support one or more parts. The cart includes a first stanchion connected to a second stanchion by a beam. A coupling system is removably connected to the powered vehicle and the cart, as described herein.

Certain examples of the present disclosure provide a method including connecting the coupling system to the powered vehicle and the cart in a hitching position; removing the coupling system from the powered vehicle and the cart; and securing the coupling system to a portion of the cart in a stowed position, wherein the coupling system in the stowed position is not connected to the powered vehicle.

### BRIEF DESCRIPTION OF THE DRAWINGS

Figure 1 illustrates a simplified lateral view of a coupling system that removably connects a cart to a powered vehicle, according to an example of the present disclosure.
Figure 2 illustrates an isometric lateral view of the coupling system connected to a stanchion of a cart, according to an example of the present disclosure.
Figure 3 illustrates an isometric lateral view of a connecting arm, according to an example of the present disclosure.
Figure 4 illustrates a perspective rear view of a hitch extending from a rear end of the powered vehicle, according to an example of the present disclosure.
Figure 5 illustrates an isometric top view of an adapter, according to an example of the present disclosure.
Figure 6 illustrates an isometric front view of an adapter, according to an example of the present disclosure.
Figure 7 illustrates a top view of the adapter of Figure 6.
Figure 8 illustrates an isometric view of a securing clamp secured to a beam, according to an example of the present disclosure.
Figure 9 illustrates a front view of a securing clamp, according to an example of the present disclosure.
Figure 10 illustrates an end view of the securing clamp of Figure 9.
Figure 11 illustrates a top view of the securing clamp of Figure 9.
Figure 12 illustrates an isometric lateral view of the coupling system secured to the cart in a stowed position, according to an example of the present disclosure.
Figure 13 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

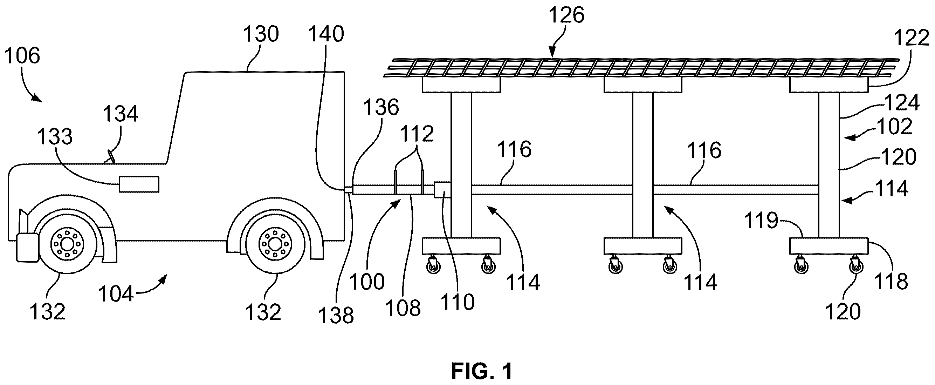

Figure 1 illustrates a simplified lateral view of a coupling system 100 that removably connects a cart 102 to a powered vehicle 104, according to an example of the present disclosure. A system 106 includes the powered vehicle 104 connected to the cart 102 by the coupling system 100. The coupling system 100 includes a connecting arm 108, an adapter 110, and one or more securing clamps 112. As shown in Figure 1, the coupling system 100 is in a hitching position, in which the coupling system 100 connects to the cart 102, and allows a puller, such as the powered vehicle 104 (or an individual) to pull the cart 102 from a position that is forward form the cart 102. As described herein, the coupling system 100 is configured to be moved from the hitching position (such as the coupling system 100 being connected to both the cart 102 and the powered vehicle 104), and a stowed position, in which the coupling system 100 is not connected to the powered vehicle 104, but is secured to another portion of the cart 102.

The cart 102 is unpowered, and includes a plurality of stanchions 114 connected together by one or more beams 116 (for example, tubes, rods, or the like). For example, the cart 102 includes three stanchions 114, such that a first stanchion 114 is connected to a second stanchion 114 by a first beam 116, and the second stanchion 114 is connected to a third stanchion 114 by a second beam 116. Optionally, the cart 102 can include less than three stanchions 114 (such as two stanchions 114), or more than three stanchions 114 (such as four or five stanchions 114).

Each stanchion 114 includes a base 118, such as a flat planar panel. One or more rollers 121 downwardly extend from the base 118. Each roller 121 can be a caster configured to rotate 360 degrees about a vertical axis (such as defined by a pin downwardly extending from the base 118. A column 120 upwardly extends from the base 118. For example, the column 120 upwardly extends from a top surface 119 of the base 118. A support bar 122 extends from a top end 124 of the column 120, opposite from the base 118. The support bar 122 can include lateral retention protuberances.

The cart 102 provides a part conveying cart that is configured to support parts 126 on the support bars 122 of the stanchions 114. The parts 126 extend over and between the support bars 122 of the stanchions 114. Example of the parts 126 include I-beams (such as aluminum I-beams), panels, tubes, cables, and/or the like. The coupling system 100 removably secures to a leading or first stanchion 114 of the cart 102 by the adapter 110.

The powered vehicle 104 can be a motorized tug or truck, for example, The powered vehicle 104 includes a main body 130, and a plurality of wheels 132 downwardly extending from the main body 130. A motor 133 is operatively coupled to one or more of the wheels 132, and is configured to provide power to automatically move the powered vehicle 104. The powered vehicle 104 also includes one or more controls 134 (such as a steering wheel, joystick, and/or the like) that are configured to control operation of the powered vehicle 104. The connecting arm 108 includes a leading end 136 that removably connects to a hitch 138 disposed at a rear end 140 of the powered vehicle 104.

As described herein, the coupling system 100 is configured to removably connect to the cart 102. The coupling system 100 includes the connecting arm 108, and the adapter 110 coupled to the connecting arm 108. The adapter 110 is configured to removably secure the connecting arm 108 to a stanchion 114 of the cart 102. In at least one example, one or more securing clamps 112 are coupled to the connecting arm 108. The securing clamp(s) 112 are configured to removably secure the coupling system 100 in a stowed position to a beam 116 of the cart 102. In at least one example, the connecting arm 108 includes the leading end 136, which is configured to removably connect to the hitch 138 of the powered vehicle 104.

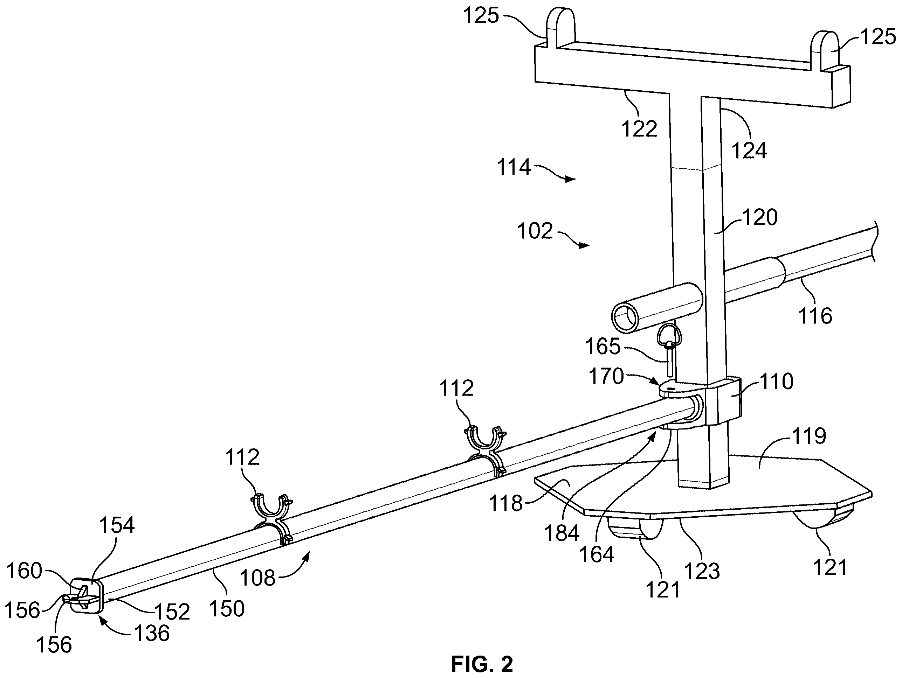

Figure 2 illustrates an isometric lateral view of the coupling system 100 connected to a stanchion 114 of the cart 102, according to an example of the present disclosure. The base 118 can be a flat panel having three rollers 121 downwardly extending from a bottom surface 123. The beam 116 connects to the stanchion 114 proximate to a mid-point of the column 120. As shown, the adapter 110 connects to the column 120 below the beam 116. In particular, the adapter 110 can connect to the column 120 between the base 118 and the beam 116.

The coupling system 100 changes the way forces are applied to the cart 102 during a pulling operation. By coupling the adapter 110 to the column 120 below the beam 116, the adapter 110 connects the coupling system 100 to the cart 102 below a center of gravity of the cart 102, thereby providing the powered vehicle 104 with more control over the cart 102.

A support bar 122 extends from (or otherwise connects to) the top end 124 of the column 120. As shown, the support bar 122 can include lateral retention protuberances 125, which are configured to constrain lateral shifting of the parts 126 (shown in Figure 1) therebetween.

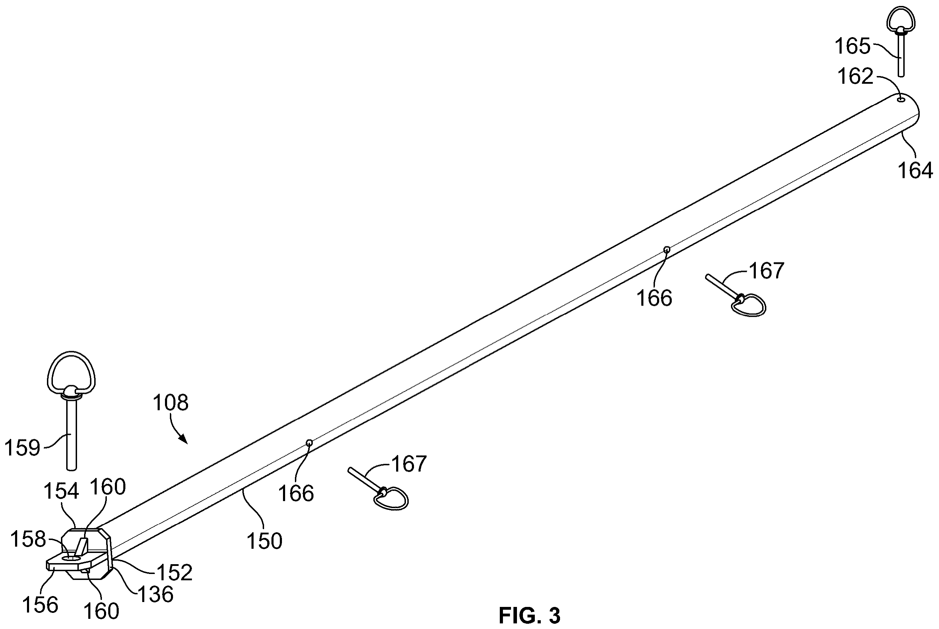

Figure 3 illustrates an isometric lateral view of the connecting arm 108, according to an example of the present disclosure. The connecting arm 108 includes a main body 150, such as a linear tube, beam, or the like. The leading end 136 extends forwardly from a first end 152 of the main body 150. The leading end 136 includes an upright wall 154 and a tab 156, which is orthogonal to the upright wall 154, forwardly extending from upright wall 154. A passage 158 is formed through the tab 156 and is configured to receive and retain a pin 159 that pivotally connects the leading end 136 to the hitch 138 of the powered vehicle 104 (shown in Figure 1).

Angled support braces 160 can connect the upright wall 154 to the tab 156 above and below the tab 156. The support braces 160 provide bracing strength to the tab 156, and prevent the tab 156 from deforming. The support braces 160 can also provide hard stops that limit a range of pivotal motion of the leading end 136 relative to the hitch 138. Optionally, the connecting arm 108 may not include the support braces 160.

A passage 162 is formed through a trailing end 164 of the main body 150. The passage 162 is configured to receive and pivotally retain a pin 165 that pivotally couples the connecting arm 108 to the adapter 110. The adapter 110 can be removably coupled to the connecting arm 108 by the pin 165. Optionally, the adapter 110 can be permanently fixed to the connecting arm 108 by a pivot pin that is not configured to be removed from the connecting arm 108 and the adapter 110.

As shown in Figure 3, the main body 150 can also include one or more passages 166 at points between the leading end 136 and the trailing end 164. The passages 166 are configured to receive pins 167 that connect the securing clamps 112 (shown in Figure 2) to the main body 150. Optionally, the securing clamps 112 can secure to the main body without pins. In such an example, the main body 150 may not include the passages 166. As another example, the pins 167 can be received by quick connect couplers.

In at least one example, the connecting arm 108 can have a length between 5-10 feet. For example, the connecting arm 108 can have a length of 8 feet. The connecting arm 108 can be formed of a metal, such as aluminum.

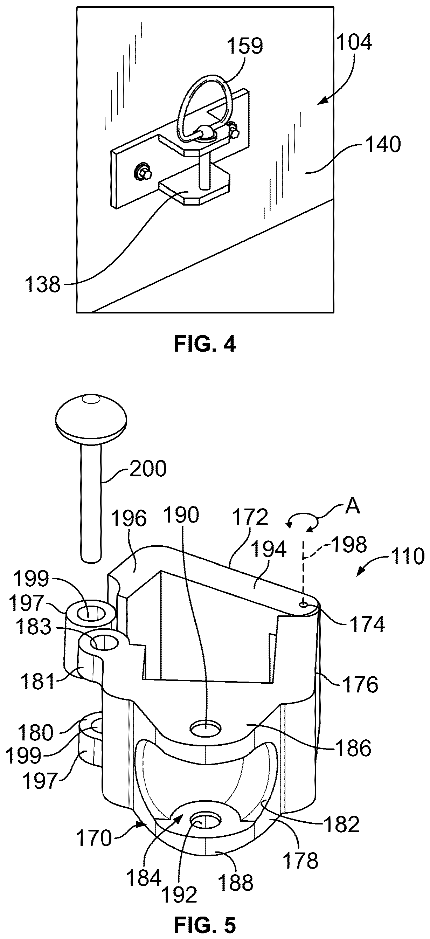

Figure 4 illustrates a perspective rear view of the hitch 138 extending from the rear end 140 of the powered vehicle 104, according to an example of the present disclosure. Referring to Figures 2-4, the tab 156 of the leading end 136 of the connecting arm 108 fits within the hitch 138, and the pin 159 pivotally couples the leading end 136 to the hitch 138.

Figure 5 illustrates an isometric top view of the adapter 110, according to an example of the present disclosure. The adapter 110 includes an arm interface 170 pivotally connected to a securing clamp 172 by a hinge 174, thereby providing a clam-shell design. The arm interface 170 includes an extension wall 176 connected to a securing wall 178, such as at a right angle. A connecting wall 180 extends from the securing wall 178 opposite from the extension wall 176. The connecting wall 180 includes an outwardly-extending stud 181 that defines a passage 183.

The securing wall 178 includes an arcuate (such as semi-spherical) wall 182 defining a pivot chamber 184. An upper pivot wall 186 extends above the pivot chamber 184, and a lower pivot wall 188 extends below the pivot chamber 184. The upper pivot wall 186 includes a passage 190 that is coaxial with a passage 192 of the lower pivot wall 188.

The securing clamp 172 includes a rear wall 194 and a connecting wall 196 extending from the rear wall 194 opposite from the hinge 174. The rear wall 194 pivotally connects to the extension wall 176 of the arm interface 170 at the hinge 174, which defines a pivot axis 198. The connecting wall 196 includes one or more outwardly-extending studs 197 that define passages 199.

The arm interface 170 is configured to pivot about the pivot axis 198 in the directions of arc A. The adapter 110 is configured to move between an open position, in which adapter 110 can be fit around the column 120 of the stanchion 114 (shown in Figure 2), and a closed position (shown in Figure 2) in which the adapter 110 clamps to the column 120. In the closed position, the passage 183 of the connecting wall 180 is coaxial with the passage(s) 199 of the connecting wall 196. A pin 200 is then passed into the coaxial passages 183 and 199 to lock the adapter 110 in the closed position. In this manner, the adapter 110 is secured to the stanchion 114 of the cart 102. In order to remove the adapter 110 from the stanchion 114, the pin 200 is removed, the adapter 110 is pivoted to the open position, and the adapter 110 can then be removed from the stanchion 114.

Referring to Figure 2, 3, and 5, the trailing end 164 of the connecting arm 108 is inserted into the pivot chamber 184 of the adapter 110 such that the passage 162 is coaxially aligned with the passages 190 and 192. The pin 165 is then inserted into the coaxial passages 162, 190, and 192, thereby providing a pivotal connection between the connecting arm 108 and the adapter 110. The connecting arm 108 can remain secured to the adapter 110 by the pin 165. Optionally, the pin 165 can be removed so that the connecting arm 108 can be disconnected from the adapter 110.

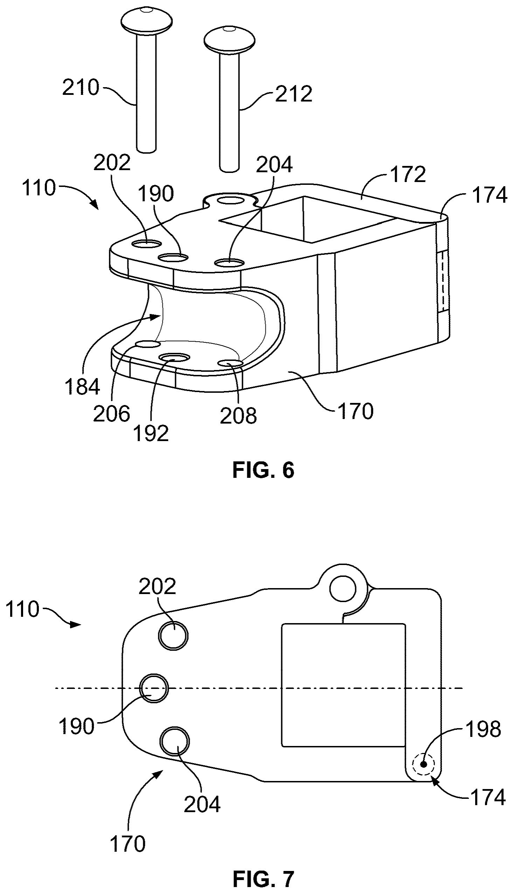

Figure 6 illustrates an isometric front view of the adapter 110, according to an example of the present disclosure. Figure 7 illustrates a top view of the adapter 110 of Figure 6. In at least one example, the adapter 110 can include pivot-limiting passages 202 and 204 formed through the upper pivot wall 186, and pivot-limiting passages 206 and 208 formed through the lower pivot wall 188. The pivot-limiting passages 202 and 206 are coaxial, while the pivot-limiting passages 204 and 208 are coaxial. The pivot-limiting passages 202 and 206 are configured to receive and retain a limiter pin 210, while the pivot-limiting passages 204 and 208 are configured to receive and retain a limiter pin 212. The limiter pins 210 and 212 provide barriers past which the connecting arm 108 (shown in Figures 2 and 3) cannot further pivot t. As such, the limiter pins 210 and 212 secured to the adapter 110 define a range of pivotal motion. The (first) limiter pin 210 and the (second) limiter pin 212 secured to the adapter 110 define a range of pivotal motion of the connecting arm 108 relative to the adapter 110. Optionally, the limiter pins 210 and 212 can be permanently fixed within the pivot chamber 184.

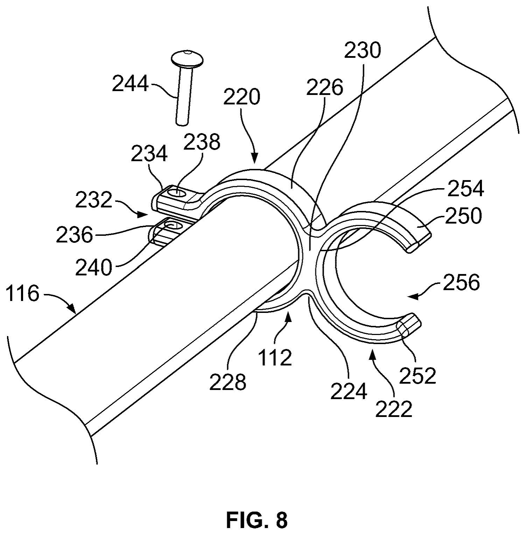

Figure 8 illustrates an isometric view of a securing clamp 112 secured to a beam, according to an example of the present disclosure. Referring to Figures 1, 2, and 8, each securing clamp 112 includes a beam interface 220 connected to an arm interface 222 by a junction 224. The beam interface 220 includes opposed prongs 226 and 228 extending from a first side 230 of the junction 224. The prongs 226 and 228 define an opening 232 therebetween. The prongs 226 and 228 define a C-shape. Studs 234 and 236 extend from distal ends of the prongs 228 and 228. Each stud 234 and 236 defines a passage 238 and 240, respectively. The passages 238 and 240 are coaxial and configured to receive and retain a pin 244. The prongs 226 and 228 are configured to outwardly deflect and resiliently clamp around an outer portion of the beam 116. The pin 244 can be used to securely lock the prongs 226 and 228 around the portion of the beam 116. Optionally, the beam interface 220 may not include the studs 234 and 236, and can resiliently couple to the portion of the beam 116.

The arm interface 222 also includes opposed prongs 250 and 252 extending from a second side 254 of the junction 224. The prongs 250 and 252 define opening 256 therebetween. The prongs 250 and 252 define a C-shape. As shown in Figure 2, the prongs 250 and 252 are configured to deflect and fit around a portion of the main body 150 of the connecting arm 108. That is, a portion of the main body 150 is securely retained within the opening 256.

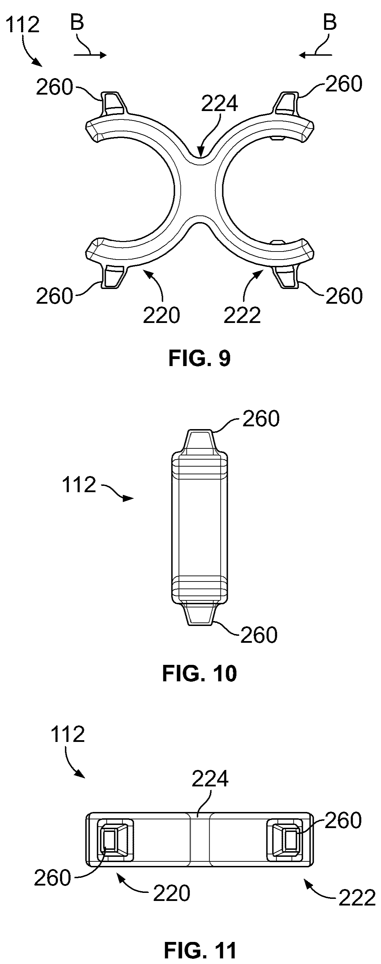

Figure 9 illustrates a front view of a securing clamp 112, according to an example of the present disclosure. Figure 10 illustrates an end view of the securing clamp 112 of Figure 9. Figure 11 illustrates a top view of the securing clamp 112 of Figure 9. Referring to Figures 9-11, engagement protuberances 260 (such as ergonomic buttons) can outwardly extend from any of the prongs of the beam interface 220 and/or the arm interface 222. An individual can grasp the engagement protuberances 260 in the directions of arrows B to further open the prongs in relation to one another. In doing so, the securing clamp 112 can be easily removed from the beam 116 (shown in Figure 1) and/or the connecting arm 108 (shown in Figure 2). In at least one example, the engagement protuberances 260 provide vertical spike thumb buttons, which provide readily discernable leverage points. Optionally, the securing clamp 112 may not include the engagement protuberances 260.

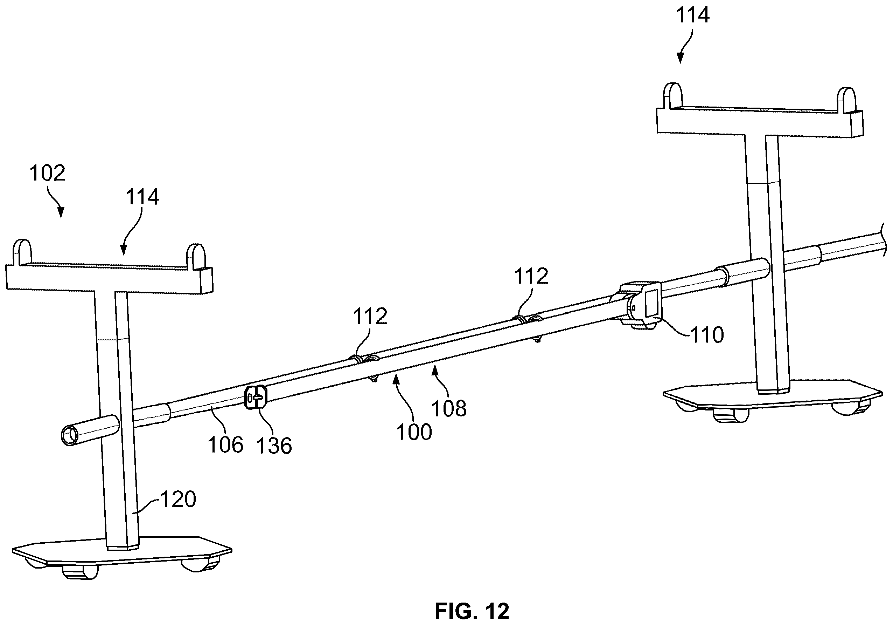

Figure 12 illustrates an isometric lateral view of the coupling system 100 secured to the cart 102 in a stowed position, according to an example of the present disclosure. Referring to Figures 1 and 12, when not in use, the coupling system 100 can be removed from the powered vehicle 104 (such as by removing the leading end 136 from the hitch 138), and the adapter 110 can be opened and removed from the column 120 of the stanchion 114. The coupling system 100 can then be secured to the beam 116 of the cart 102 by one or more securing clamps 112. By securing the coupling system 100 to the cart 102 in the stowed position, as shown in Figure 12, the coupling system 100 does not protrude or otherwise outwardly extend from a front of the stanchion 114, and thereby eliminates, minimizes, or otherwise reduces a potential of an individual inadvertently contacting the coupling system 100. The coupling system 100 in the stowed position does not present a tripping hazard, for example.

Referring to Figures 1-12, in order to connect the cart 102 to the powered vehicle 104, the coupling system 100 in the stowed position is removed from the beam 116. The adapter 110 is then opened and clamped to the column 120 of a stanchion 114. The leading end 136 is then secured to the hitch 138. In this manner, the coupling system 100 is removably connected to each of the cart 102 and the powered vehicle 104 to quickly and easily connect the cart 102 to the powered vehicle 104.

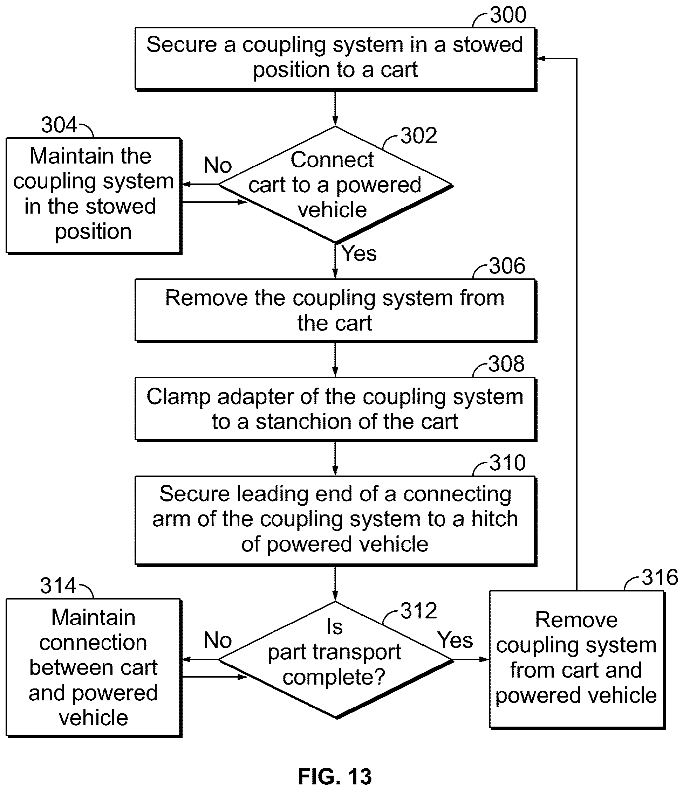

Figure 13 illustrates a flow chart of a method, according to an example of the present disclosure. Referring to Figures 1 and 13, at 300, the coupling system 100 is secured to the cart 102 in a stowed position. For example, the coupling system 100 is secured to the beam 116 of the cart 102 by one or more securing clamps 112, as shown in Figure 12.

At 302, it is determined if the cart 102 is to be connected to the powered vehicle 104 in order to transport parts 126 between different locations. If not, the method proceeds to 304, at which the coupling system 100 is maintained in the stowed position.

If, however, the cart 102 is to be connected to the powered vehicle 104 at 302, the method proceeds to 306, at which the coupling system 100 in the stowed position is removed from the cart 102. The coupling system 100 is no longer in the stowed position after being removed from the cart 102.

Next, at 308, the adapter 110, which is secured to the connecting arm 108, is clamped to a stanchion 114 of the cart 102. At 310, the leading end 136 of the connecting arm 108 of the coupling system 100 is secured to the hitch 138 of the powered vehicle 104. Step 308 can occur before, during, or after step 310.

At 312, it is determined if transportation of parts 126 is complete. If not, the method proceeds to 314, at which the connection by the coupling system 100 between the cart 102 and the powered vehicle 104 is maintained.

If, however, the transportation of the parts 126 is complete at 312, the method proceeds to 316, at which the coupling system 100 is removed from the cart 102 and the powered vehicle 104. The method then returns to 300.

Referring to Figures 1-13, the coupling system 100 allows movement of a cart 102, which may not be originally designed for motorized pull processes, to quickly and easily attach the hitch 138 of the powered vehicle 104, while providing a stable structure, hitch point, and storage system that allows movement without compromising the design of the cart 102. The powered vehicle 104 can provide a motorized tug that is able to move the cart 102 between locations within a factory, for example. The securing clamp(s) 112 provide a quick connect coupler that allows the coupling system 100 to be easily secured to the cart 102 in a stowed position, such as shown in Figure 12. The coupling system 100 (when not in use to connect the cart 102 to the powered vehicle 104) secured to the cart 102 in the stowed position ensures that coupling system 100 is readily available when needed, and also eliminates a tripping hazard. The coupling system 100 is configured to connect the cart 102 to the powered vehicle 104, and also be secured to the cart 102 in a stowed position when not in use.

The coupling system 100 connects the cart 102 to the powered vehicle 104 such that an individual operating the powered vehicle 104 is in front of the cart 102, which holds the parts 126, instead of beside the parts, thereby effectively eliminating safety concern in relation to the individual. Optionally, the coupling system 100 can be manually pulled by the individual (in front of the cart 102), instead of by the powered vehicle. For example, the individual can grasp the leading end 136 of the connecting arm 108 to pull the cart 102. In either scenario, because the individual is in in front of the cart 102, the individual is able to readily see obstacles, such as at intersections, as opposed to being behind, pushing the cart 102, which can present blind spots, such as at intersections.

Because the coupling system 100 eliminates the need for a two person push and pull movement process, the stanchions 114 of the cart 102 can be adjusted to a low ride height, thereby increase the stability of the cart 102. Further, because the adapter 110 secures the coupling system 100 to the column 120 of the stanchion relatively close to the rollers 121, a tipping potential is eliminated, minimized, or otherwise reduced.

In at least one example, the adapter 110 and the securing clamp 112 can be formed via three-dimensional (3D) printing. As such, the adapter 110 and the securing clamp 112 can be cost-effectively replaced if necessary (in contrast to molded metal parts, for example), and also easily adapted to fit desired design requirements. Further, the coupling system 100 can be used with a wide variety of unpowered carts other than shown. As such, new carts need not be produced to be able to be used with the coupling system 100.

Further, the disclosure comprises examples according to the following clauses:
Clause 1. A coupling system configured to removably connect to a cart, the coupling system comprising:
   a connecting arm; and
   an adapter coupled to the connecting arm,
   wherein the adapter is configured to removably secure the connecting arm to one or more stanchions of the cart.
Clause 2. The coupling system of Clause 1, wherein the connecting arm comprises a leading end configured to removably connect to a hitch of a powered vehicle, and wherein the leading end is configured to pivotally connect to the hitch.
Clause 3. The coupling system of Clauses 1 or 2, wherein the one or more stanchions comprise a first stanchion connected to a second stanchion, wherein a beam connects the first stanchion to the second stanchion.
Clause 4. The coupling system of Clause 3, wherein the adapter is configured to removably connect to a column of the first stanchion below the beam.
Clause 5. The coupling system of any of Clauses 1-4, wherein the one or more stanchions comprise:
   a base;
   rollers downwardly extending from the base;
   a column upwardly extending from the base; and
   a support bar extending from a top end of the column.
Clause 6. The coupling system of any of Clauses 1-5, wherein the connecting arm is pivotally coupled to the adapter.
Clause 7. The coupling system of any of Clauses 1-6, wherein the adapter includes an arm interface pivotally connected to a securing clamp by a hinge, wherein the adapter is moveable between an open position and a closed position, wherein the adapter in the closed position is configured to clamp to a portion of the one or more stanchions.
Clause 8. The coupling system of any of Clauses 1-7, wherein the adapter comprises a first limiter pin and a second limiter pin, wherein a range of pivotal motion of the connecting arm relative to the adapter is defined between the first limiter pin and the second limiter pin.
Clause 9. The coupling system of any of Clauses 1-8, further comprising one or more securing clamps coupled to the connecting arm, wherein the one or more securing clamps are configured to removably secure the coupling system in a stowed position to a beam of the cart.
Clause 10. The coupling system of Clause 9, wherein the one or more securing clamps comprise a beam interface connected to an arm interface by a junction.
Clause 11. The coupling system of Clause 10, wherein the beam interface and the arm interface comprise prongs defining an opening therebetween.
Clause 12. The coupling system of Clause 11, wherein one or more of the prongs comprises engagement protuberances.
Clause 13. The coupling system of any of Clauses 1-12, wherein the adapter and the one or more securing clamps are formed via three-dimensional (3D) printing.
Clause 14. A system comprising:
   a powered vehicle;
   a cart configured to support one or more parts, wherein the cart comprises a first stanchion connected to a second stanchion by a beam; and
   a coupling system removably connected to the powered vehicle and the cart, the coupling system comprising:
      a connecting arm comprising a leading end configured to removably connect to a hitch of a powered vehicle, wherein the leading end is configured to pivotally connect to the hitch;
      an adapter pivotally coupled to the connecting arm, wherein the adapter removably secures the connecting arm to the first stanchion of the cart; and
      one or more securing clamps coupled to the connecting arm, wherein the one or more securing clamps are configured to removably secure the coupling system in a stowed position to the beam of the cart.
Clause 15. The system of Clause 14, wherein the adapter is configured to removably connect to a column of the first stanchion below the beam.
Clause 16. The system of Clauses 14 or 15, wherein the one or more stanchions comprise:
   a base;
   rollers downwardly extending from the base;
   a column upwardly extending from the base; and
   a support bar extending from a top end of the column.
Clause 17. The system of any of Clauses 14-16, wherein the adapter includes an arm interface pivotally connected to a securing clamp by a hinge, wherein the adapter is moveable between an open position and a closed position, wherein the adapter in the closed position is configured to clamp to a portion of the first stanchion.
Clause 18. The system of any of Clauses 14-17, wherein the adapter comprises a first limiter pin and a second limiter pin, wherein a range of pivotal motion of the connecting arm relative to the adapter is defined between the first limiter pin and the second limiter pin.
Clause 19. The system of any of Clauses 14-18, wherein the one or more securing clamps comprise a beam interface connected to an arm interface by a junction, wherein the beam interface and the arm interface comprise prongs defining an opening therebetween, and wherein one or more of the prongs comprises engagement protuberances.
Clause 20. A method for a system comprising:
   a powered vehicle;
   a cart configured to support one or more parts; and
   a coupling system removably connected to the powered vehicle and the cart,
   the method comprising:
      connecting the coupling system to the powered vehicle and the cart in a hitching position;
      removing the coupling system from the powered vehicle and the cart; and
      securing the coupling system to a portion of the cart in a stowed position, wherein the coupling system in the stowed position is not connected to the powered vehicle.

As described herein, examples of the present disclosure provide improved systems and methods for transporting parts within a factory. Further, examples of the present disclosure provide systems and methods that eliminate, minimize, or otherwise reduce a need for manual labor when transporting parts within a factory.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A coupling system (100) configured to removably connect to a cart (102), the coupling system (100) comprising:
a connecting arm (108); and
an adapter (110) coupled to the connecting arm (108),
wherein the adapter (110) is configured to removably secure the connecting arm (108) to one or more stanchions (114) of the cart (102).

2. The coupling system (100) of claim 1, wherein the connecting arm (108) comprises a leading end (136) configured to removably connect to a hitch (138) of a powered vehicle (104), and wherein the leading end (136) is configured to pivotally connect to the hitch (138).

3. The coupling system (100) of claim 1 or 2, wherein the one or more stanchions (114) comprise a first stanchion (114) connected to a second stanchion (114), wherein a beam connects the first stanchion (114) to the second stanchion (114).

4. The coupling system (100) of claim 3, wherein the adapter (110) is configured to removably connect to a column (120) of the first stanchion (114) below the beam.

5. The coupling system (100) of any of claims 1-4, wherein the one or more stanchions (114) comprise:
a base (118);
rollers (121) downwardly extending from the base (118);
a column (120) upwardly extending from the base (118); and
a support bar (122) extending from a top end (124) of the column (120).

6. The coupling system (100) of any of claims 1-5, wherein the connecting arm (108) is pivotally coupled to the adapter (110).

7. The coupling system (100) of any of claims 1-6, wherein the adapter (110) includes an arm interface (222) pivotally connected to a securing clamp (112) by a hinge, wherein the adapter (110) is moveable between an open position and a closed position, wherein the adapter (110) in the closed position is configured to clamp to a portion of the one or more stanchions (114).

8. The coupling system (100) of any of claims 1-7, wherein the adapter (110) comprises a first limiter pin (159, 200) and a second limiter pin (159, 200), wherein a range of pivotal motion of the connecting arm (108) relative to the adapter (110) is defined between the first limiter pin (159, 200) and the second limiter pin (159, 200).

9. The coupling system (100) of any of claims 1-8, further comprising one or more securing clamps (112) coupled to the connecting arm (108), wherein the one or more securing clamps (112) are configured to removably secure the coupling system (100) in a stowed position to a beam of the cart (102).

10. The coupling system (100) of claim 9, wherein the one or more securing clamps (112) comprise a beam interface (220) connected to an arm interface (222) by a junction (224).

11. The coupling system (100) of claim 10, wherein the beam interface (220) and the arm interface (222) comprise prongs (226, 228, 250, 252) defining an opening (232) therebetween.

12. The coupling system (100) of claim 11, wherein one or more of the prongs (226, 228, 250, 252) comprises engagement protuberances (260).

13. The coupling system (100) of any of claims 1-12, wherein the adapter (110) and the one or more securing clamps (112) are formed via three-dimensional (3D) printing.

14. A system (106) comprising:
a powered vehicle (104);
a cart (102) configured to support one or more parts (126), wherein the cart (102) comprises a first stanchion (114) connected to a second stanchion (114) by a beam; and
a coupling system (100) of any of the preceding claims, the coupling system (100) being removably connected to the powered vehicle (104) and the cart (102).

15. A method for a system (106) comprising:
a powered vehicle (104);
a cart (102) configured to support one or more parts (126); and
a coupling system (100) removably connected to the powered vehicle (104) and the cart (102),
the method comprising:
connecting the coupling system (100) to the powered vehicle (104) and the cart (102) in a hitching position;
removing the coupling system (100) from the powered vehicle (104) and the cart (102); and
securing the coupling system (100) to a portion of the cart (102) in a stowed position, wherein the coupling system (100) in the stowed position is not connected to the powered vehicle (104).
